# EUROPEAN PATENT SPECIFICATION

(11) **EP 1 809 052 B1**
(45) Date of publication and mention of the grant of the patent: **23.12.2009**
(21) Application number: 07100396.6
(22) Date of filing: 11.01.2007
(51) Int. Cl.: H04W 48/18

(54) **Method and system for user roaming and service roaming in a digital broadcasting system**
Verfahren und System für Benutzer-Roaming und Dienst-Roaming in einem digitalen Rundfunksystem
Procédé et système d' itinérance utilisateur et d'itinérance de services dans un système de radiodiffusion numérique

(30) Priority: 12.01.2006 KR 20060003684; 27.02.2006 KR 20060018945
(43) Date of publication of application: 18.07.2007
(73) Proprietor: Samsung Electronics Co., Ltd., Suwon-si, Gyeonggi-Do (KR)
(72) Inventor: Liling, Xu c/o Samsung Electronics Co., Ltd., Gyeonggi-do (KR); Jong-Hyo, Lee c/o Samsung Electronics Co., Ltd., Gyeonggi-do (KR); Bo-Sun, Jung c/o Samsung Electronics Co., Ltd., Gyeonggi-do (KR); Hye-Young, Lee c/o Samsung Electronics Co., Ltd., Gyeonggi-do (KR); Kook-Heui, Lee c/o Samsung Electronics Co., Ltd., Gyeonggi-do (KR); Jong-Hoon, Ann c/o Samsung Electronics Co., Ltd., Gyeonggi-do (KR); Jae-Yeon, Song c/o Samsung Electronics Co., Ltd., Gyeonggi-do (KR)
(74) Representative: Grünecker, Kinkeldey, Stockmair & Schwanhäusser Anwaltssozietät

(56) References cited:
- WO-A-98/37685
- GB-A- 2 403 631
- HOUSSOS N ET AL: "A VHE architecture for advanced value-added service provision in 3rd generation mobile communication networks" SERVICE PORTABILITY AND VIRTUAL CUSTOMER ENVIRONMENTS, 2000 IEEE SAN FRANCISCO, CA, USA 1 DEC. 2000, PISCATAWAY, NJ, USA,IEEE, US, 2001, pages 69-78, XP010551465 ISBN: 0-7803-7133-X

## Description

### BACKGROUND OF THE INVENTION

### 1. Field of the Invention

The present invention generally relates to digital broadcasting. More particularly, the present invention relates to a method and system for enabling a receiving terminal to roam from a home network to a foreign network.

### 2. Description of the Related Art

Today, the development of communication and broadcasting technologies has led to provisioning of mobile broadcasting in a broadcasting system or a mobile communication system. The mobile broadcasting under consideration sends packet data on a broadcast channel as well as provides a typical broadcasting service confined to audio and video. Mobile broadcasting starts with service discovery and subscription by a mobile terminal such as a mobile broadcasting-enabled portable phone, laptop computer, Personal Digital Assistant (PDA), or the like, followed by transmission of control information associated with service reception, transmission of a service, and reception of the service by the mobile terminal.

Open Mobile Alliance (OMA) is one of standardization bodies for developing interoperable mobile service enablers. The OMA focuses on standardization of a variety of applications including mobile games, Internet service, and the like. In particular, the OMA Browser and Content (BAC) Mobile Broadcasting SubWorking Group (BCAST) is working on a technology of providing a broadcasting service to mobile terminal capable of communicating with an interactive network.

To receive a broadcasting service in a mobile broadcasting system, a terminal first receives a description about the service itself, accounting information of the service, and a Service Guide (SG) that tells how the service can be received, and then receives the service using the SG.

When the terminal moves from a network of a home service provider to which the user has subscribed (i.e. home network) to a network of a foreign service provider (i.e. foreign network), the user may want to receive a broadcasting service of the home network or a service of the foreign service provider with which the home service provider has a roaming agreement. Accordingly, there is a need for a procedure and system for efficiently supporting roaming of broadcasting services in a mobile broadcasting system.

The article "A VHE architecture for advanced value-added service provision in 3rd generation mobile communication networks" of N. Houssos et. al, IEEE 2000, describes a communication system for providing value-added services (VAS) for mobile terminals entering a foreign or "access network." According to this document there are two different roaming scenarios in which the proposed VAS provision platform is either supported or not supported by the serving operator. In the former case, the user actively has to select whether he requests a service discovery client from the home or the visited network. At a later step, the user again has to select whether he wants to access the home or visited network services. Due to these multiple selection steps, use of the services on his mobile terminal becomes complicated for the user.

WO 98/37685 A is concerned with delivering announcements (such as voice messages) to a user who has roamed to a foreign network. In order to be able to provide the user with announcements in his native language, this documents suggests to pass on the announcements associated with a requested service to the foreign or visited network. Thus, the system of WO 98/37685 A can always offer user roaming, and service roaming is not necessary anymore.

### SUMMARY OF THE INVENTION

An aspect of the present invention is to address at least the problems and/or disadvantages enumerated above and to provide at least the advantages described below. Accordingly, the object of the present invention is to provide improved methods, apparatus and system for receiving an intended broadcasting service through user roaming and service roaming by a terminal in a foreign network of a foreign service provider other than a home service provider in a digital broadcasting system. This object is solved by a method according to claims 1 and 10 and by an apparatus and a system according to claims 19 and 28.

In accordance with another aspect of the present invention, there is provided a roaming method for a terminal in a mobile broadcasting system, in which the terminal receives an ESG from a foreign service provider after entering into a foreign network operated by the foreign service provider, selects a roaming type between user roaming and service roaming by determining if an intended broadcasting service is provided from the foreign network. Referring to the ESG, the mobile terminal receives the intended service from the foreign service provider, if the roaming type is the user roaming, and receives the intended service from a home service provider over the foreign network, if the roaming type is the service roaming.

In accordance with yet another aspect of the present invention, there is provided a method of providing a roaming service to a terminal in a mobile broadcasting system, in which a roaming proposal message is received from a terminal that has entered from a home network operated by a home service provider to a foreign network operated by a foreign service provider, it is determined whether a roaming type indicated by the roaming proposal message is user roaming or service roaming. An intended service requested by the terminal is provided to the terminal from the foreign service provider, if the roaming type is the user roaming, and the intended service is received from the home service provider and provided to the terminal, if the roaming type is the service roaming.

In accordance with a further aspect of the present invention, there is provided a terminal apparatus for receiving a roaming service in a mobile broadcasting system, in which a broadcasting receiver accesses a broadcasting network and receives data and signaling of a broadcasting service. An interactive adaptor accesses an interactive network connected to the broadcasting network and sends and receives signals associated with the roaming service. A mobility manager selects a roaming type between user roaming and service roaming by determining whether an intended broadcasting service is provided from a foreign network operated by a foreign service provider based on an ESG received from the foreign service provider after entering into the foreign network. The mobility manager controls the broadcasting receiver to receive the intended service from the foreign service provider, if the roaming type is the user roaming, and controls the interactive adaptor to receive the intended service from a home service provider over the interactive network, if the roaming type is the service roaming.

In accordance with still another aspect of the present invention, there is provided a network apparatus for providing a roaming service to a terminal in a mobile broadcasting system, in which a terminal capable of receiving a broadcasting service has subscribed to a home service provider, and a foreign service provider receives a roaming proposal message from the terminal when the terminal enters from a home network operated by the home service provider into a foreign network. It determines whether a roaming type indicated by the roaming proposal message is user roaming or service roaming, provides an intended service of the terminal to the terminal from the foreign service provider if the roaming type is the user roaming, and receives the intended service from the home service provider and provides the intended service to the terminal, if the roaming type is the service roaming.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram of a mobile broadcasting-associated network architecture according to the present invention;
FIG. 2 is a block diagram of a roaming-associated network architecture according to the present invention;
FIG. 3 is a flowchart showing an operation of a receiver according to the present invention;
FIG. 4 is a flowchart of an operation of a foreign network according to the present invention;
FIG. 5 is a block diagram of a transmitter according to the present invention;
FIG. 6 is a block diagram of the receiver according to the present invention;
FIGs. 7A and 7B are flow diagrams showing signal flows for user roaming and service roaming according to the present invention;
FIG. 8 is a flowchart showing an operation of the receiver according to the present invention;
FIG 9 is a flowchart showing an operation of the transmitter according to the present invention; and
FIG. 10 is a flow diagram showing a signal flow according to the present invention.

### DETAILED DESCRIPTION OF PREFERRED EMBODIMENTS

The following detailed construction and elements are provided to assist in a better understanding of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

In a system according to the present invention, when a receiver (i.e. terminal) which has subscribed to a home service provider roams from a service area of the home service provider (a home service area) to a service area of a foreign service provider (a foreign service area), the terminal first receives an Electronic Service Guide (ESG) from the foreign service provider and determines a roaming type based on a service list included in the ESG. Then the terminal performs one of user roaming and service roaming according to the roaming type. User roaming means that a user has access to the services provided from a foreign network, and service roaming means that the same services provided from a home network can be accessed in a foreign network. A service that the terminal receives in the foreign network may have the same contents as or different contents from a service received from the home network before roaming.

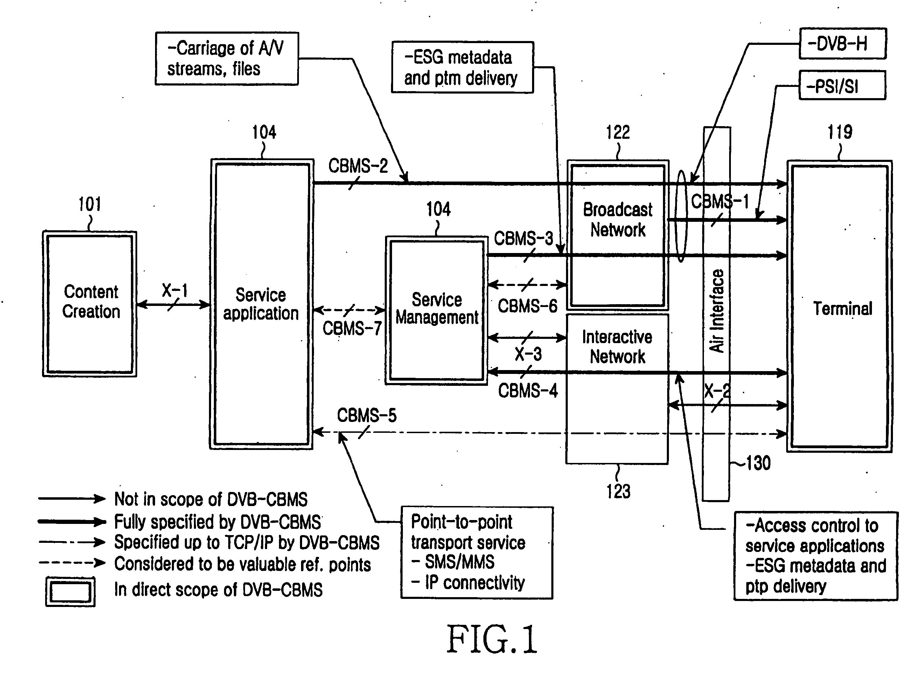

Referring to Figure 1, the blocks shown are logical entities distinguished by their functions. They can be separated physically, or reside in the same server. A Content Creator (CC) 101 produces content sources for a broadcasting service. A Service Application (SA) 104 generates a specific service out of the content sources and metadata additionally required for service configuration. A Service Manager (SM) 108 has the functionalities of service configuration, resource allocation, ESG provisioning, security, and the like.

A broadcast network 122 is a network for sending broadcasting service data. The broadcast network 122 can be a Digital Video Broadcasting-Handheld (DVB-H) system, for example. An interactive network 123 is typically a Universal Mobile Telecommunications System (UMTS) or International Mobile Telecommunications-2000 (IMT-2000) cellular network, to which the present invention is not limited. Hence, the interactive network 123 can be any type of network that receives information or requests from terminals and responds to the transmitted information or requests to the terminals. A terminal 119 is a user terminal capable of accessing the interactive network 123 and receiving broadcasting services.

Interfaces between entities including the above-described logical entities are defined in FIG. 1.

X-1, X-2 and X-3 interfaces are reference points between the broadcast network and other entities. Generally, these interfaces are not used in Digital Video Broadcasting-Handheld (DVB-H) based interactive standards. X-1 interfaces between CC 101 and SA 104, X-2 interfaces between interactive network 123 and terminal 119, and X-3 interfaces between SM 108 and interactive network 123.

The Convergence of Broadcasting and Mobile Service-1 (CBMS-1) interface carries broadcasting-associated signals, and the CBMS-2 interface delivers contents such as audio, video, files, etc. The CBMS-3 interface delivers ESG, the CBMS-4 interface delivers ESG by Point-to-Point (PtP) transmission, and the CBMS-5 delivers Short Message Service (SMS) messages and Multimedia Messaging Service (MSS) messages by PtP transmission. The CBMS-6 interface conveys configuration parameters including the number of services for DVB-H transmission, allocated bandwidths, etc. The CBMS-7 interface conveys service application declarations and metadata. Since the above description of the interfaces is made of major functions of the interfaces, it is to be understood that it does not limit the functional scope of the interfaces.

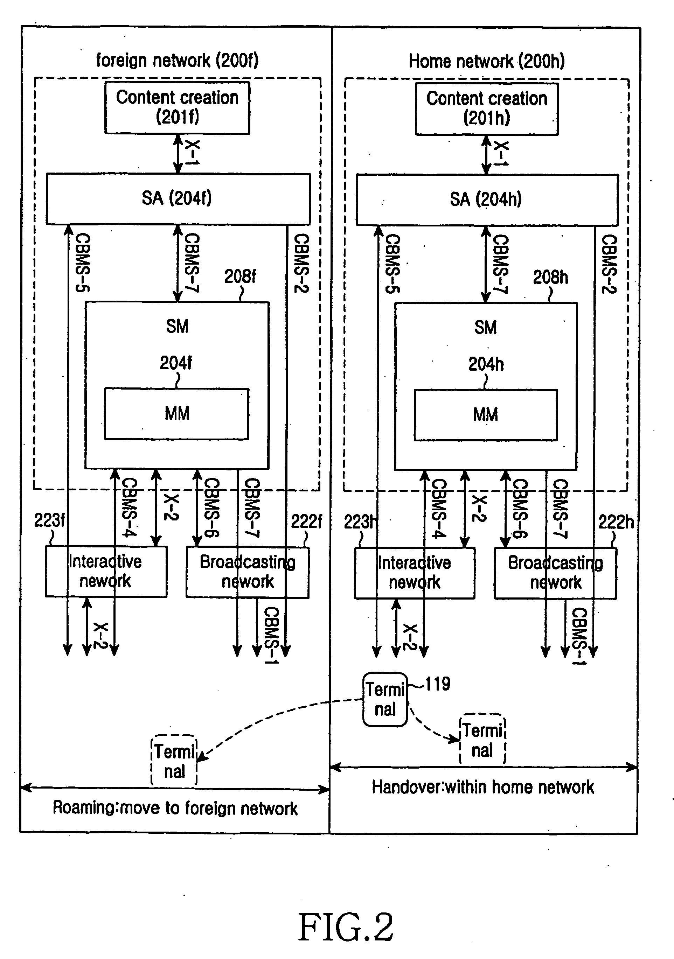

Referring to FIG. 2, basic blocks, 201f and 201f, 204f and 204h, 208f and 208h, interactive networks 223f and 223h, and broadcast networks 222f and 222h operate as described with reference to FIG 1. The entities of a foreign network 200f and the entities of a home network 200h are distinguished by adding 'f' and 'h' to the reference numerals. Logical entities associated with roaming are Mobility Managers (MMs) 240f and 240h in the SMs 208f and 208h. The MMs 240f and 240h are responsible for roaming proposal processing and terminal user authorization for terminal 119 which is located in home network 200h or roams to foreign network 200f.

The receiving terminal is capable of accessing the interactive network and the MM of the foreign service provider is aware that the terminal is located in the foreign network. The ESG of the foreign service provider is sent by "free air" service so that any terminal can receive the ESG and interpret it.

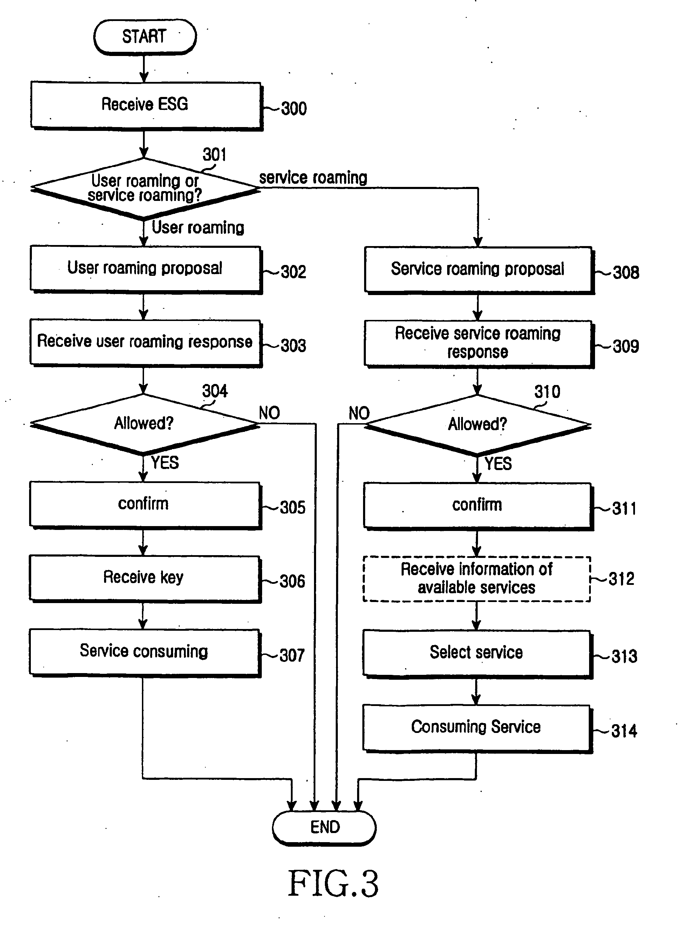

Referring to FIG. 3, the terminal moves from a home network to a foreign network and receives an ESG from the foreign network in step 300. In step 301, the terminal determines from the ESG if an intended service is provided in the foreign network and selects a roaming type according to whether the intended service is available. The intended service has the same contents as or different contents from a service received from the home network before roaming. If the intended service is available in the foreign network, which means that user roaming is required, the terminal sends a user roaming proposal message to a foreign service provider of the foreign network in step 302.

The terminal receives a response message for the user roaming proposal message in step 303 and determines from the response message if a roaming service is allowed for the terminal in the foreign network in step 304. If the roaming service is allowed, the terminal sends a confirm message in step 305, receives an access key (e.g. a descrambling key or deciphering key) by which to access the broadcasting data of the intended service from the foreign service provider in step 306, and receives the intended service using the access key from the foreign service provider in step 307. The response message allowing the roaming service includes accounting information regarding the use of the service in the foreign network. On the other hand, if the roaming service is not allowed in step 304, the procedure ends.

If the intended service is not available in the foreign network in step 301, which means that service roaming is required, the terminal sends a service roaming proposal message to the foreign service provider in step 308 and receives a response message for the service roaming proposal message in step 309. The terminal determines from the response message if a roaming service is allowed for the terminal in the foreign network in step 310. If the roaming service is allowed, the terminal sends a confirm message in step 311. The response message allowing the roaming service includes accounting information regarding the use of the service in the foreign network.

In step 312, the terminal can receive a service list including information about available services that can be provided to the roaming user from the home network from the foreign service provider. In this case, the terminal selects an intended service from the service list and notifies the foreign service provider of the selected service. The elected service may have the same contents as or different contents from the intended service depending on the availability of which the terminal determines a roaming type in step 301. In step 314, the terminal receives the selected service through the foreign service provider or over the interactive network. The service list may be provided in an ESG or an ESG-like form. The available service information may include access parameters (e.g. access keys) for use in receiving the available services.

It can be further contemplated as another preferred embodiment of the present invention that if the terminal continues to receive the same service of the home network from the foreign network, the foreign service provider can be informed of the intended service from the terminal or the home service provider. In this case, steps 312 and 313 are not performed.

The operation of the foreign network takes place mostly in the Mobility Managers (MM) of the foreign network (hereinafter referred to as the foreign MM). Thus, the following description focuses on the operation of the foreign MM.

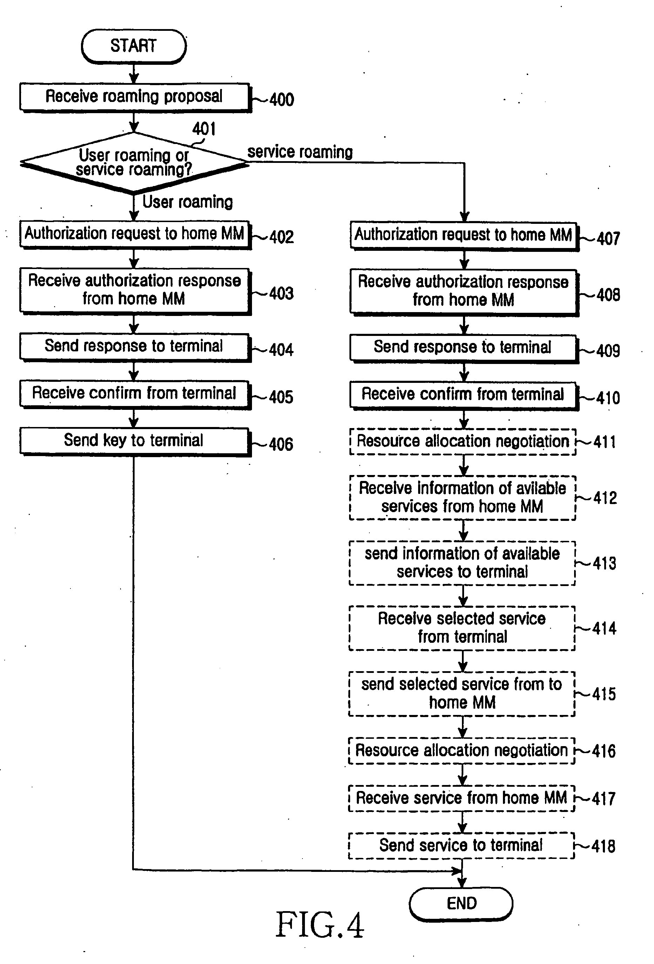

Referring to FIG. 4, the foreign MM receives a roaming proposal message from the terminal in step 400 and determines a roaming type by analyzing the roaming proposal message in step 401. If the roaming proposal message indicates user roaming, the foreign MM sends a user authorization request to the MM of the home service provider (hereinafter, referred to as the home MM) in step 402. Upon receipt of a response message for the user authorization request message in step 403, the foreign MM sends the response message to the terminal in step 404. After receiving a confirm message from the terminal in step 405, the foreign MM sends a service access key to the terminal in step 406.

On the other hand, if the roaming proposal message indicates service roaming, the foreign MM sends a user authorization request to the home service provider in step 407. Upon receipt of a response message for the user authorization request message in step 408, the foreign MM sends the response message to the terminal in step 409.

The foreign MM receives a confirm message from the terminal in step 410. Then, in step 411 or 416, a resource allocation negotiation for service provisioning is conducted among the foreign MM, the home MM, and the interactive network over which a service is provided. During the resource allocation negotiation, parameters representing Quality of Service (QoS) for service provisioning to the roaming user and information about resource allocation are exchanged and parameters for actual setup of a service transmission path are shared among the three entities. The resource allocation negotiation may take place in step 411 before the terminal determines its intended service or in step 416 after the terminal determines its intended service. [Dotted lines mean optional steps according to system implementation.]

If the foreign MM receives available service information for the roaming use from the home MM in step 412, it forwards the available service information to the terminal in step 413. The foreign MM receives information about a service that the terminal has selected based on the available service information from the terminal in step 414 and forwards the selected service information to the home MM in step 415. It can be further contemplated as another preferred embodiment of the present invention that if the terminal continues to receive the same service of the home network from the foreign network, the foreign service provider can be informed of the intended service from the terminal or the home service provider. In this case, steps 412 to 415 are not performed.

After the afore-described resource allocation negotiation, the foreign service providers provide the selected service which is indicated by the selected service information and received from the home MM to the terminal over the interactive network in steps 417 and 418. Steps 417 and 418 are needed when the terminal-selected service is provided to the interactive network through the foreign service provider. When the service is directly provided to the interactive network from the home service provider, steps 417 and 418 are not performed.

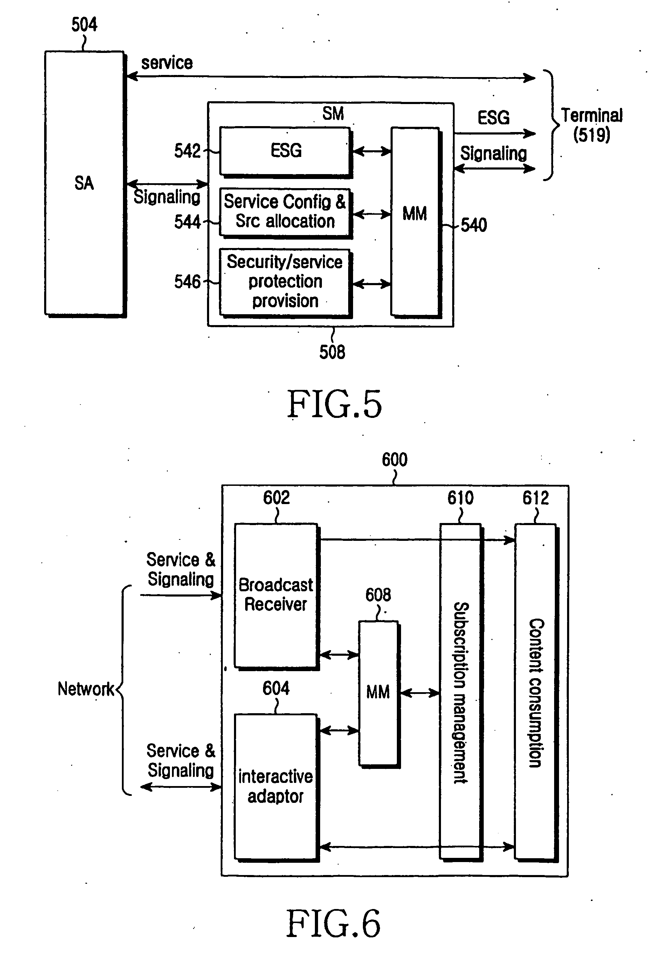

Referring to FIG.5, only entities that implement logical functions associated with preferred embodiments of the present invention within the SMs of the home network and the foreign network are shown. In an SM 508, an ESG entity 542 creates an ESG and sends it. A service configuration & source allocation entity 544 is responsible for service configuration and network resource allocation. A security/service protection provision entity 546 is responsible for security and authorization, service protection, and service provisioning. These three entities 542, 544 and 546 are connected to an MM 540 and perform functions needed for roaming. The MM 540 carries out operations associated with the mobility of terminals, particularly operations associated with the roaming service.

The MM 540 has the following functionalities.
- reception of a terminal's roaming proposal and transmission of a roaming response
- user authorization signaling with the MM of the foreign service provider
- management of basic information and accounting information about the terminal that wants roaming
- communication with other entities within the SM, for roaming.

Referring to FIG. 6, a receiver 600 is a terminal equipped with an interactive adaptor 604 for connecting to the interactive network as well as a broadcasting receiver 602. Roaming-associated signals from the broadcast receiver 602 and the interactive adaptor 604 are provided to a Mobility Manager (MM) 608. To perform a roaming-associated operation as described with reference to FIG. 3, MM 608 is connected to a subscription manager 610 for operating with regard to service subscription and a content consumer 612 for providing a broadcasting service to the user. MM 608 sends a roaming-associated signal to the interactive network through interactive adaptor 604.

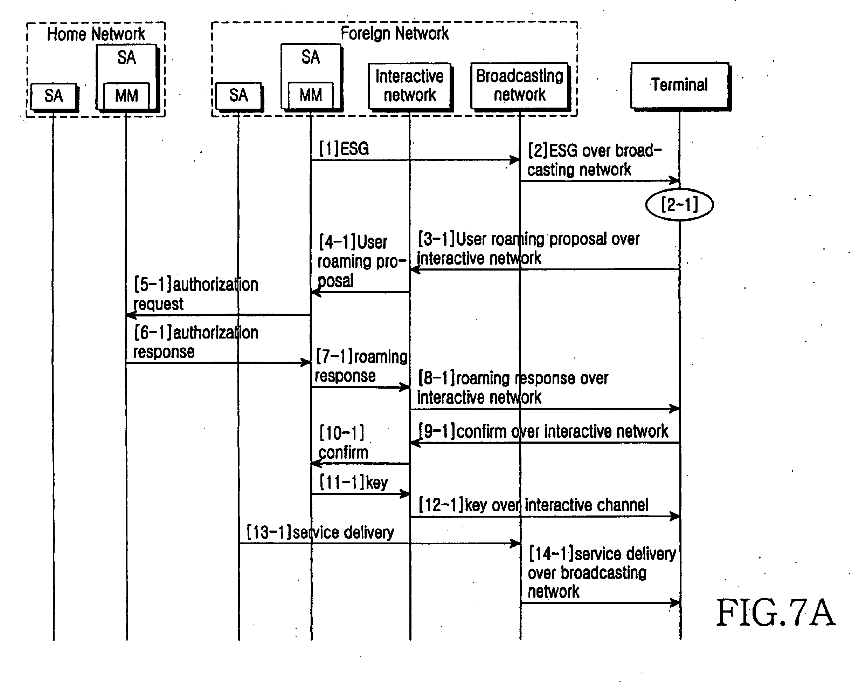

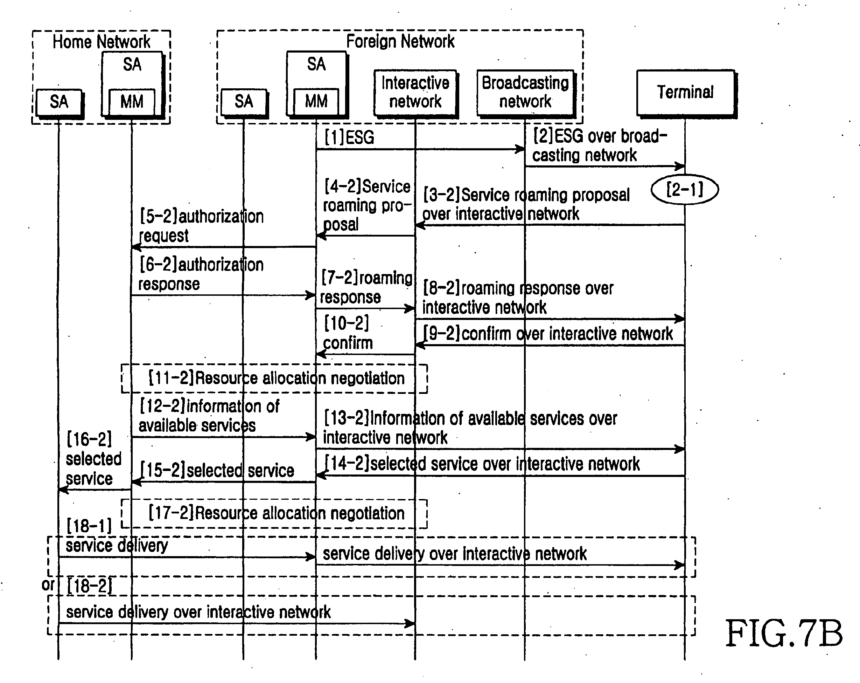

Referring to FIGs. 7A and 7B, signaling between the foreign network and the terminal is carried out over the interactive network. The terminal receives an ESG of the foreign service provider from the foreign MM within the foreign Subscription Management (SM) over a broadcasting network in the foreign service area in steps [1] and [2]. The ESG is not targeted at roaming users but is a typical ESG broadcast over the broadcasting network. The terminal determines a roaming type based on available service information included in the ESG in step [2-1].

If the terminal decides on user roaming in step [2-1], it sends a user roaming proposal message to the foreign service provider over the interactive network in steps [3-1] and [4-1]. The user roaming proposal message may include information indicating a service that the terminal wants. The foreign MM sends an authorization request for the roaming-requesting terminal to the home service provider in step [5-1]. When the home service provider authorizes the terminal in step [6-1], the foreign MM sends a roaming response message to the terminal over the interactive network in steps [7-1] and [8-1]. The terminal replies to the foreign MM with a confirm message for the roaming response message over the interactive network in steps [9-1] and [10-1]. To enable the terminal to receive the intended service, the foreign MM sends a service access key to the terminal over the interactive network in steps [11-1] and [12-1]. Using the service access key, the terminal can access the intended service provided from the foreign SA over the broadcasting network in steps [13-1] and [14-1].

If the terminal decides on service roaming in step [2-1], it sends a service roaming proposal message to the foreign service provider over the interactive network in steps [3-2] and [4-2] as shown in FIG. 7B. The foreign MM performs user authorization by signaling with the home MM in steps [5-2] and [6-2]. If the user authorization is successful, the foreign MM sends a roaming response message to the terminal over the interactive network in steps [7-2] and [8-2] and receives a confirm message from the terminal in steps [9-2] and [10-2].

In step [11-2] or [17-2], resource allocation negotiation is conducted among the home MM, the foreign MM, and the interactive network. Meanwhile, after the user authorization, the home MM sends available service information for the roaming user to the foreign MM in step [12-2] and the foreign MM sends the available service information to the terminal over the interactive network in step [13-2]. The terminal selects an intended service based on the available service information and notifies the foreign MM of the selected service by selected service information in step [14-2]. The foreign MM sends the selected service information to the home MM in step [15-2].

The home MM sends the selected service information to the home SA responsible for actual service delivery in step [16-2]. In the case where the home service provider sends the selected service directly to the terminal over the interactive network without the intervention of the foreign service provider, information about an entry point of the interactive network, for service delivery and information about the terminal can be sent to the home SA in step [16-2]. The home service provider sends the selected service to the terminal over the interactive network in steps [18-1] and [18-2]. For example, the home service provider sends the selected service to the foreign service provider and then the foreign service provider forwards the selected service to the terminal over the interactive network in step [18-1]. Alternatively, the home service provider provides the selected service directly to the terminal over the interactive network without the intervention of the foreign service provider in step [18-2].

Table 1 to Table 6 below list fields of the messages involved in the procedures illustrated in FIGs. 7A and 7B. The sequence and names of the message fields are not limited to the tables and some of the message fields are optional.

**Table 1- Roaming Proposal**

| Name | Description |
|---|---|
| Roaming proposal | Identifier of roaming proposal message |
| Roaming type | Identifier of roaming type: User or Service |
| User ID | User identity |
| Home Network ID | Identity of network that terminal belongs to |
| Service ID | Identifier of service that terminal wants to consume * in service roaming, here it means information of available home service. |

**Table 2 - Authorization Request**

| Name | Description |
|---|---|
| Authorization request ID | Identifier of authorization request message |
| User ID | User identity |
| Visited Network ID | Identity of network that terminal is in |
| Roaming type | Roaming service that terminal wants to consume: User or Service |

**Table 3 Authorization Response**

| Name | Description |
|---|---|
| Authorization response ID | Identifier of authorization response message |
| Authorization result | Terminal's request for roaming is allowed or not |

**Table 4 Roaming Response**

| Name | Description |
|---|---|
| Roaming response ID | Identifier of roaming response message I |
| Roaming type | Identifier of roaming type: User or Service |
| Roaming result | Roaming request is allowed or not |
| Charging | Based on charging information |

**Table 5 Confirm**

| Name | Description |
|---|---|
| Confirm ID | Identifier of confirm message |
| Agree or not | Confirm information to MM |

**Table 6 Select Service**

| Name | Description |
|---|---|
| Select service ID | Identifier of Select service message |
| Service ID | Identifier of service that terminal wants to consume |

In accordance with another preferred embodiment of the present invention, if omission of authorization is agreed between the home service provider and the foreign service provider or if no authorization is required between different networks, the user is allowed to carry out the use of roaming or service roaming without authorization. Consequently, the user can perform faster roaming.

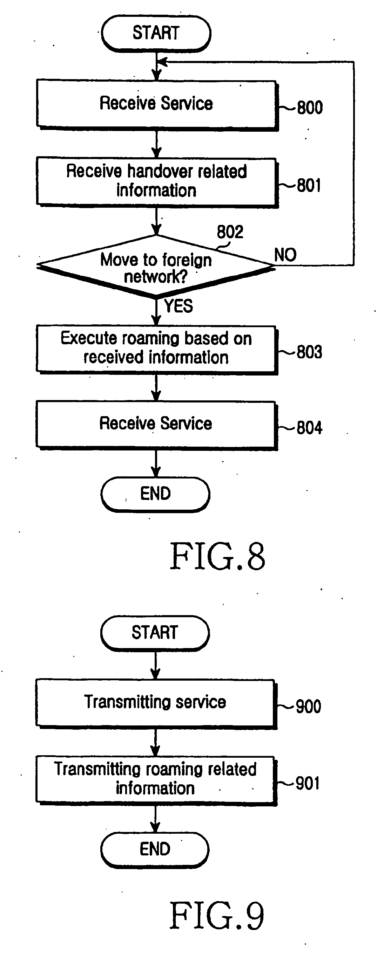

Referring to FIG. 8, the terminal is receiving a service from the home network in step 800. In step 801, the terminal receives handover information from the home service provider in the home network. The handover information further includes roaming information indicating whether authorization is required during roaming in addition to typical handover information.

According to European Telecommunications Standards Institute (ETSI) Technical Report (TR) 101 211 Digital Video Broadcasting (DVB), Guidelines on implementation and usage of Service Information (SI), when the user needs additional information, the network sends the additional information to the terminal by a linkage descriptor. The home service provider may send to the user roaming information indicating that a service from the foreign service provider is available to the user without authorization by a reserved and unused part of handover_type in the linkage descriptor. An exemplary linkage descriptor is illustrated in Table 7.

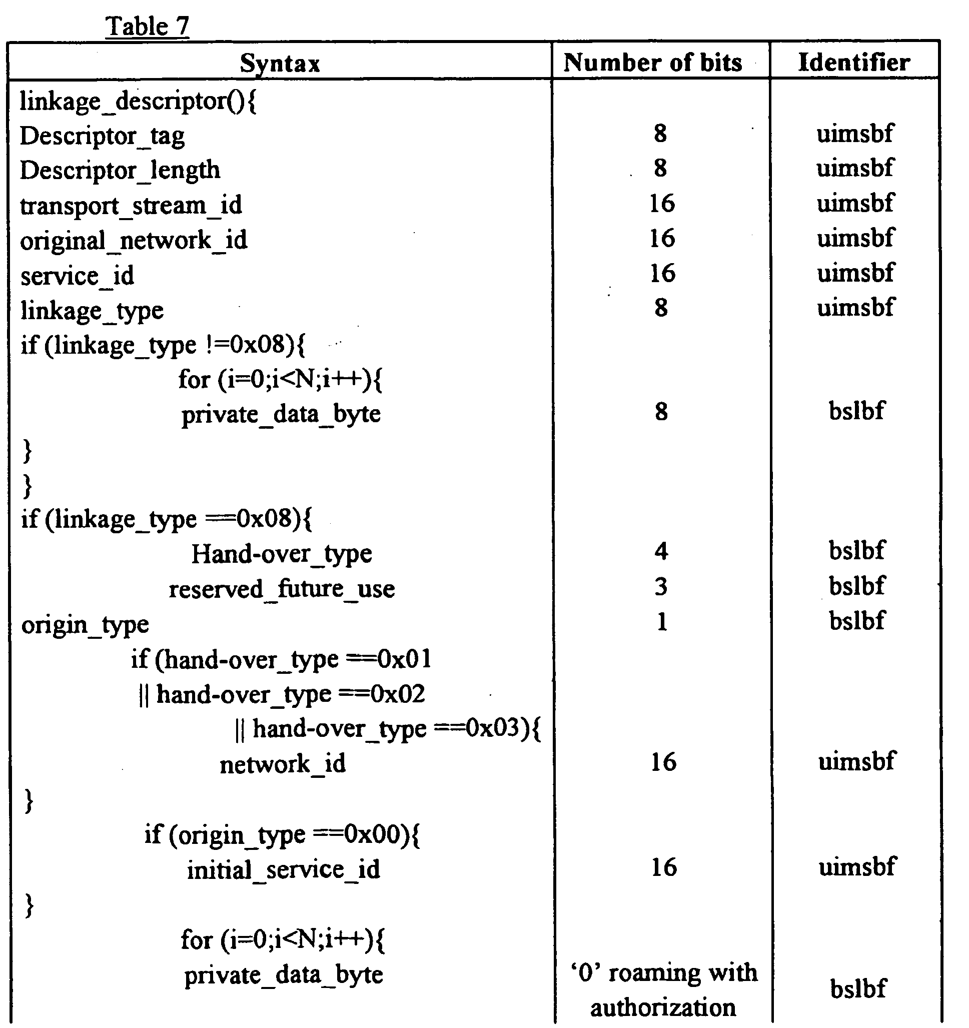

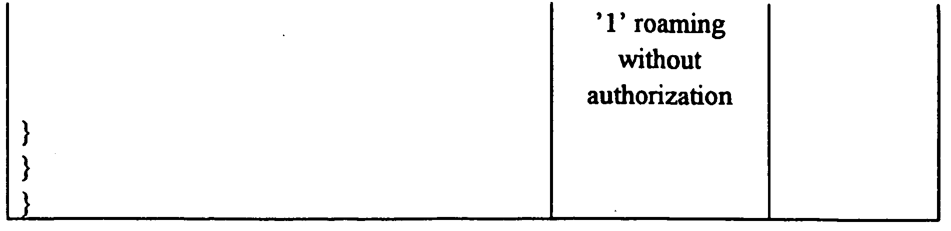

In Table 7, private_data_byte is set to 0, if it indicates roaming with authorization and it is set to 1, if it indicates roaming without authorization. Other information fields having no relation to roaming information will not be described herein.

The format of the linkage descriptor is for illustrative purposes and thus it is to be clearly understood that the present invention is not limited to Table 7. It can be further contemplated as another preferred embodiment of the present invention that if the terminal can access the interactive network, it requests necessary information, particularly roaming information to the interactive network directly or via the homer service provider, and the home service provider sends the roaming information to the terminal over the interactive network or the broadcasting network.

In step 802, the terminal locates itself. If the terminal has moved to a foreign network, the terminal goes to step 803 and otherwise, it returns to step 800 to continue to receive the on-going service. In step 803, the terminal performs roaming to the foreign network based on the roaming information. Referring to the roaming information, the terminal may perform only frequency tuning for accessing the foreign network by identifying a changed frequency and Transport Stream (TS) without the need for authorization. The terminal continues to receive the selected service at the tuned frequency in step 804.

Referring to FIG.9, while providing a service in step 900, the transmitter sends roaming information to support service roaming and user roaming for terminals receiving the service in the network. The roaming information is the handover information described with reference to FIG. 8 and Table 7 and/or terminal-requested information. The roaming information indicates whether the terminal can receive a service from the foreign service provider without authorization.

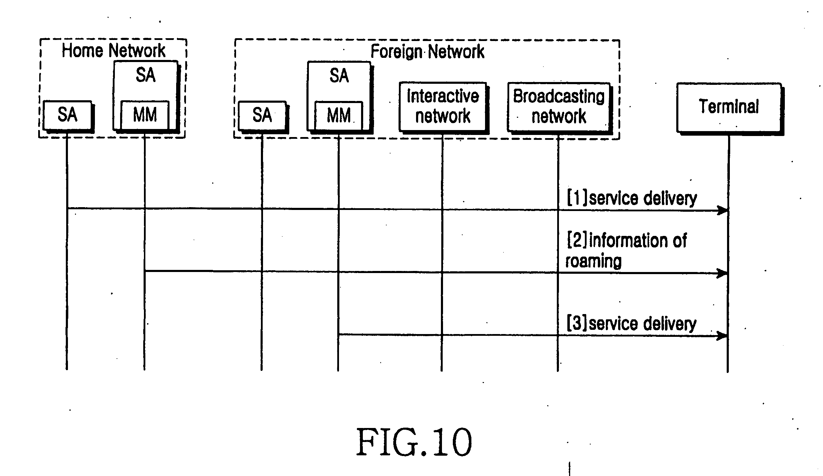

Referring to FIG. 10, the terminal receives a user-selected service from the home network in step [1] and receives roaming information from the home MM in step [2]. Steps [1] and [2] are not always sequential. If roaming information is sent by service-related control information, Program Specific Information (PSI)/Service Information (SI), steps [1] and [2] may take place concurrently.

Later, when the terminal moves out of the home network and enters into the foreign network, it performs user roaming or service roaming to the foreign network without authorization according to the roaming information. The terminal then receives a user-selected service provided by the home service provider or the foreign service provider in step [3].

As is apparent from the above description, a terminal determines a roaming type referring to a received ESG and receives user roaming or service roaming according to the roaming type in a mobile broadcasting system according to the preferred embodiments of the present invention. Therefore, the terminal can receive an intended service successfully from a foreign network.

While the invention has been shown and described with reference to certain preferred embodiments of the present invention thereof, it will be understood by those skilled in the art that various changes in form and details may be made therein without departing from the scope of the present invention as further defined by the appended claims and their equivalents.

## Claims

1. A roaming method for a terminal (119) in a mobile broadcasting system, comprising:
receiving at a mobile terminal, an Electronic Service Guide (ESG) including a list of services capable to be provided in a foreign network (200f) from a foreign service provider after entering into the foreign network (200f) operated by the foreign service provider;
determining if an intended broadcasting service is provided from the foreign network (200f), referring to the ESG;
selecting a roaming type between user roaming and service roaming according to whether the intended service is available in the foreign network (200f);
receiving the intended service from the foreign service provider, if the roaming type is the user roaming; and
receiving the intended service from a home service provider over the foreign network (200f), if the roaming type is the service roaming.

2. The roaming method of claim 1, further comprising:
sending a user roaming proposal message indicating the user roaming to the foreign service provider and receiving a response message for the user roaming proposal message from the foreign service provider, if the roaming type is the user roaming;
sending a confirm message to the foreign service provider, if the response message allows provisioning of the intended service in the foreign network (200f); and
receiving an access key for receiving the intended service from the foreign service provider.

3. The roaming method of claim 2, wherein at least one of the user roaming proposal message, the response message, and the confirm message is delivered over an interactive network (123) connected to the foreign service provider and accessible to the terminal (119).

4. The roaming method of claim 1, further comprising:
sending a service roaming proposal message indicating the service roaming to the foreign service provider and receiving a response message for the service roaming proposal message from the foreign service provider, if the roaming type is the service roaming;
sending a confirm message to the foreign service provider, if the response message allows provisioning of the intended service in the foreign network (200f); and
performing resource allocation negotiation for provisioning of the intended service between the home service provider and the foreign service provider.

5. The roaming method of claim 4, wherein at least one of the service roaming proposal message, the response message, and the confirm message is delivered over an interactive network (123) accessible to the terminal (119).

6. The roaming method of claim 1, comprising receiving the intended service from a home service provider over the foreign network (200f), if the roaming type is the service roaming, which comprises receiving broadcasting data of the intended service from the home service provider over an interactive network (123) accessible to the terminal (119).

7. The roaming method of claim 1, comprising receiving the intended service from a home service provider over the foreign network (200f), if the roaming type is the service roaming, which comprises receiving broadcasting data of the intended service from the home service provider over a broadcasting network (122) belonging to the foreign service provider.

8. The roaming method of claim 1, further comprising:
receiving available service information for a roaming user from the home service provider through the foreign service provider, if the roaming type is the service roaming;
selecting the intended service based on the available service information and notifying the foreign service provider of the selected service.

9. The roaming method of claim 1, further comprising:
receiving from the home service provider roaming information indicating if user authorization is required during roaming to the foreign network (200f); and
performing roaming to the foreign network (200f) without the user authorization for the terminal (119) between the home service provider and the foreign service provider, if the roaming information indicates that the user authorization is not required.

10. A method of providing a roaming service to a terminal (119) in a mobile broadcasting system, comprising:
receiving a roaming proposal message from a terminal (119) that has entered from a home network (200h) operated by a home service provider to a foreign network (200f) operated by a foreign service provider, and determining whether a roaming type indicated by the roaming proposal message is user roaming or service roaming;
providing an intended service to the terminal (119) from the foreign service provider, if the roaming type is the user roaming; and
receiving the intended service from the home service provider and providing the intended service to the terminal (119), if the roaming type is the service roaming.

11. The method of claim 10, further comprising:
sending a response message for the roaming proposal message to the terminal (119), the response allowing the user roaming, if the roaming type is the user roaming; and
providing an access key for the intended service to the terminal (119), upon receipt of a confirm message from the terminal (119).

12. The method of claim 11, wherein at least one of the roaming proposal message, the response message, and the confirm message is delivered over an interactive network (123) connected to the foreign service provider and accessible to the terminal (119).

13. The method of claim 10, further comprising:
sending a response message for the roaming proposal message, the response message allowing the service roaming, if the roaming type is the service roaming; and
performing resource allocation negotiation for provisioning of the intended service between the home service provider and the foreign service provider, upon receipt of a confirm message from the terminal (119).

14. The method of claim 13, wherein at least one of the roaming proposal message, the response message, and the confirm message is delivered over an interactive network (123) accessible to the terminal (119).

15. The method of claim 10, wherein receiving the intended service from the home service provider and providing the intended service to the terminal (119), if the roaming type is the service roaming, comprises sending broadcasting data of the intended service from the home service provider to the terminal (119) over an interactive network (123) accessible to the terminal (119).

16. The method of claim 10, wherein receiving the intended service from the home service provider and providing the intended service to the terminal (119), if the roaming type is the service roaming, comprises sending broadcasting data of the intended service from the home service provider to the terminal (119) over a broadcasting network (122) belonging to the foreign service provider.

17. The method of claim 10, further comprising:
sending available service information for a roaming user from the home service provider to the terminal (119) through the foreign service provider, if the roaming type is the service roaming; and
notifying the foreign service provider of the intended service selected based on the available service information from the terminal (119).

18. The method of claim 10, further comprising:
sending roaming information from the home service provider to the terminal (119), the roaming information indicating whether user authorization is required during roaming to the foreign network (200f); and
performing roaming to the foreign network (200f) without the user authorization for the terminal (119) between the home service provider and the foreign service provider, if the roaming information indicates that the user authorization is not required.

19. A terminal apparatus for receiving a roaming service in a mobile broadcasting system, comprising:
a broadcasting receiver (602) for accessing a broadcasting network (122) and receiving data and signaling of a broadcasting service;
an interactive adaptor (604) for accessing an interactive network (123) connected to the broadcasting network (122) and sending and receiving signals associated with the roaming service; and
a mobility manager (608) for
selecting a roaming type between user roaming and service roaming by determining if and according to whether an intended broadcasting service is available in a foreign network (200f) operated by a foreign service provider based on an Electronic Service Guide (ESG) including a list of services capable to be provided in the foreign network (200f), received from the foreign service provider after entering into the foreign network (200f),
controlling the broadcasting receiver (602) to receive the intended service from the foreign service provider, if the roaming type is the user roaming, and controlling the interactive adaptor (604) to receive the intended service from a home service provider over the interactive network (123), if the roaming type is the service roaming.

20. The terminal apparatus of claim 19, wherein if the roaming type is the user roaming, the mobility manager (608) is adapted to send a user roaming proposal message indicating the user roaming to the foreign service provider and receives a response message for the user roaming proposal message from the foreign service provider, to send a confirm message to the foreign service provider, if the response message allows provisioning of the intended service in the foreign network (200f), and to receive an access key for receiving the intended service from the foreign service provider.

21. The terminal apparatus of claim 20, wherein at least one of the user roaming proposal message, the response message, and the confirm message is adapted to be delivered over the interactive network (123) connected to the foreign service provider and accessible to the terminal (119).

22. The terminal apparatus of claim 19, wherein if the roaming type is the service roaming, the mobility manager (608) is adapted to send a service roaming proposal message indicating the service roaming to the foreign service provider, receives a response message for the service roaming proposal message from the foreign service provider, to send a confirm message to the foreign service provider, if the response message allows provisioning of the intended service in the foreign network (200f), and to perform resource allocation negotiation for provisioning of the intended service between the home service provider and the foreign service provider.

23. The terminal apparatus of claim 22, wherein at least one of the service roaming proposal message, the response message, and the confirm message is adapted to be delivered over the interactive network (123) accessible to the terminal (119).

24. The terminal apparatus of claim 19, wherein if the roaming type is the service roaming, broadcasting data of the intended service is adapted to be received from the home service provider over the interactive network (123) accessible to the terminal (119).

25. The terminal apparatus of claim 19, wherein if the roaming type is the service roaming, broadcasting data of the intended service is adapted to be received from the home service provider over a broadcasting network (122) belonging to the foreign service provider.

26. The terminal apparatus of claim 19, wherein if the roaming type is the service roaming, the mobility manager (608) is adapted to receive available service information for a roaming user from the home service provider through the foreign service provider, to select the intended service based on the available service information, and to notify the foreign service provider of the selected service.

27. The terminal apparatus of claim 19, wherein the mobility manager (608) is adapted to receive from the home service provider roaming information indicating if user authorization is required during roaming to the foreign network (200f), and performs roaming to the foreign network (200f) without the user authorization for the terminal (119) between the home service provider and the foreign service provider, if the roaming information indicates that the user authorization is not required.

28. A system for providing a roaming service to a terminal (119) in a mobile broadcasting system, comprising:
a home service provider to which a terminal (119) capable of receiving a broadcasting service has subscribed to; and
a foreign service provider for
receiving a roaming proposal message from the terminal (119) when the terminal (119) enters from a home network (200h) operated by the home service provider into a foreign network (200f),
determining if a roaming type indicated by the roaming proposal message is user roaming or service roaming,
providing an intended service to the terminal (119) from the foreign service provider, if the roaming type is the user roaming, and
receiving the intended service from the home service provider and providing the intended service to the terminal (119), if the roaming type is the service roaming.

29. The system of claim 28, wherein if the roaming type is the user roaming, the foreign service provider is adapted to send a response message allowing the user roaming for the roaming proposal message, and to provide an access key for the intended service to the terminal (119), upon receipt of a confirm message from the terminal (119).

30. The system of claim 29, wherein at least one of the roaming proposal message, the response message, and the confirm message is adapted to be delivered over an interactive network (123) connected to the foreign service provider and accessible to the terminal (119).

31. The system of claim 28, wherein if the roaming type is the service roaming, the foreign service provider is adapted to send a response message allowing the service roaming for the roaming proposal message, and to perform resource allocation negotiation for provisioning of the intended service between the home service provider and the foreign service provider, upon receipt of a confirm message from the terminal (119).

32. The system of claim 31, wherein at least one of the roaming proposal message, the response message, and the confirm message is adapted to be delivered over an interactive network (123) connected to the foreign service provider and accessible to the terminal (119).

33. The system of claim 28, wherein if the roaming type is the service roaming, broadcasting data of the intended service is adapted to be sent from the home service provider to the terminal (119) over an interactive network (123) accessible to the terminal (119).

34. The system of claim 28, wherein if the roaming type is the service roaming, broadcasting data of the intended service is adapted to be sent from the home service provider to the terminal (119) over a broadcasting network (122) belonging to the foreign service provider.

35. The system of claim 28, wherein if the roaming type is the service roaming, the foreign service provider is adapted to send available service information for a roaming user from the home service provider to the terminal (119), and to be notified of the intended service selected based on the available service information from the terminal (119).

36. The system of claim 28, wherein the home service provider is adapted to send to the terminal (119) roaming information indicating whether user authorization is required during roaming to the foreign network (200f), and to perform roaming to the foreign network (200f) without the user authorization for the terminal (119) with the foreign service provider, if the roaming information indicates that the user authorization is not required.

## Patentansprüche

1. Roamingverfahren für ein Endgerät (119) in einem Mobilrundsendesystem, umfassend:
an einem Mobilendgerät erfolgendes Empfangen eines elektronischen Dienstführers (electronic service guide ESG), der eine Liste von Diensten beinhaltet, die in einem fremden Netzwerk (200f) von einem fremden Dienstbereitsteller (service provider) nach Eintritt in das von dem fremden Dienstbereitsteller betriebene fremde Netzwerk (200f) bereitgestellt werden können;
Bestimmen, ob ein gewünschter Rundsendedienst von dem fremden Netzwerk (200f) bereitgestellt wird, unter Bezugnahme auf den ESG;
Auswählen eines Roamingtyps zwischen Nutzerroaming und Dienstroaming entsprechend dem, ob der gewünschte Dienst in dem fremden Netzwerk (200f) verfügbar ist;
Empfangen des gewünschten Dienstes von dem fremden Dienstbereitsteller, wenn der Roamingtyp das Nutzerroaming ist; und
Empfangen des gewünschten Dienstes von einem eigenen Dienstbereitsteller über das fremde Netzwerk (200f), wenn der Roamingtyp das Dienstroaming ist.

2. Roamingverfahren nach Anspruch 1, des Weiteren umfassend:
Senden einer das Nutzerroaming angebenden Nutzerroaminganforderungsnachricht an den fremden Dienstbereitsteller und Empfangen einer Antwortnachricht auf die Nutzerroaminganforderungsnachricht von dem fremden Dienstbereitsteller, wenn der Roamingtyp das Nutzerroaming ist;
Senden einer Bestätigungsnachricht an den fremden Dienstbereitsteller, wenn die Antwortnachricht eine Versorgung mit dem gewünschten Dienst in dem fremden Netzwerk (200f) erlaubt; und
Empfangen eines Zugangsschlüssels zum Empfangen des gewünschten Dienstes von dem fremden Dienstbereitsteller.

3. Roamingverfahren nach Anspruch 2, wobei wenigstens eine von der Nutzerroaminganforderungsnachricht, der Antwortnachricht und der Bestätigungsnachricht über ein interaktives Netzwerk (123), das mit dem fremden Dienstbereitsteller verbunden und für das Endgerät (119) zugänglich ist, versandt wird.

4. Roamingverfahren nach Anspruch 1, des Weiteren umfassend:
Senden einer das Dienstroaming angebenden Dienstroaminganforderungsnachricht an den fremden Dienstbereitsteller und Empfangen einer Antwortnachricht auf die Dienstroaminganforderungsnachricht von dem fremden Dienstbereitsteller, wenn der Roamingtyp das Dienstroaming ist;
Senden einer Bestätigungsnachricht an den fremden Dienstbereitsteller, wenn die Antwortnachricht eine Versorgung mit dem gewünschten Dienst in dem fremden Netzwerk (200f) erlaubt; und
Durchführen einer Ressourcenzuteilungsverhandlung zur Versorgung mit dem gewünschten Dienst zwischen dem eigenen Dienstbereitsteller und dem fremden Dienstbereitsteller.

5. Roamingverfahren nach Anspruch 4, wobei wenigstens eine von der Dienstroaminganforderungsnachricht, der Antwortnachricht und der Bestätigungsnachricht über ein interaktives Netzwerk (123), das für das Endgerät (119) zugänglich ist, versandt wird.

6. Roamingverfahren nach Anspruch 1, umfassend ein Empfangen des gewünschten Dienstes von einem eigenen Dienstbereitsteller über das fremde Netzwerk (200f), wenn der Roamingtyp das Dienstroaming ist, was ein Empfangen von Rundsendedaten des gewünschten Dienstes von dem eigenen Dienstbereitsteller über ein interaktives Netzwerk (123), das für das Endgerät (119) zugänglich ist, umfasst.

7. Roamingverfahren nach Anspruch 1, umfassend ein Empfangen des gewünschten Dienstes von einem eigenen Dienstbereitsteller über das fremde Netzwerk (200f), wenn der Roamingtyp das Dienstroaming ist, was ein Empfangen von Rundsendedaten des gewünschten Dienstes von dem eigenen Dienstbereitsteller über ein Rundsendenetzwerk (122), das zu dem fremden Dienstbereitsteller gehört, umfasst.

8. Roamingverfahren nach Anspruch 1, des Weiteren umfassend:
Empfangen von einen verfügbaren Dienst betreffender Information für einen Roamingnutzer von dem eigenen Dienstbereitsteller durch den fremden Dienstbereitsteller, wenn der Roamingtyp das Dienstroaming ist;
Auswählen des gewünschten Dienstes auf Grundlage der einen verfügbaren Dienst betreffenden Information und Benachrichtigen des fremden Dienstbereitstellers über den ausgewählten Dienst.

9. Roamingverfahren nach Anspruch 1, des Weiteren umfassend:
von dem eigenen Dienstbereitsteller her erfolgendes Empfangen von Roaminginformation zur Angabe der Erforderlichkeit einer Nutzerautorisierung während des Roaming zu dem fremden Netzwerk (200f) erforderlich ist; und
Durchführen eines Roaming zu dem fremden Netzwerk (200f) ohne die Nutzerautorisierung für das Endgerät (119) zwischen dem eigenen Dienstbereitsteller und dem fremden Dienstbereitsteller, wenn die Roaminginformation angibt, dass die Nutzerautorisierung nicht erforderlich ist.

10. Verfahren zum Bereitstellen eines Roamingdienstes für ein Endgerät (119) in einem Mobilrundsendesystem, umfassend:
Empfangen einer Roaminganforderungsnachricht von einem Endgerät (119), das von einem von einem eigenen Dienstbereitsteller betriebenen eigenen Netzwerk (200h) in ein von einem fremden Dienstbereitsteller betriebenes fremdes Netzwerk (200f) eingetreten ist, und Bestimmen, ob ein von der Roaminganforderungsnachricht angegebener Roamingtyp Nutzerroaming oder Dienstroaming ist;
Bereitstellen eines gewünschten Dienstes für das Endgerät (119) von dem fremden Dienstbereitsteller, wenn der Roamingtyp das Nutzerroaming ist; und
Empfangen des gewünschten Dienstes von dem eigenen Dienstbereitsteller und Bereitstellen des gewünschten Dienstes für das Endgerät (119), wenn der Roamingtyp das Dienstroaming ist.

11. Verfahren nach Anspruch 10, des Weiteren umfassend:
Senden einer Antwortnachricht auf die Roaminganforderungsnachricht an das Endgerät (119), wobei die Antwort das Nutzerroaming erlaubt, wenn der Roamingtyp das Nutzerroaming ist; und
Bereitstellen eines Zugangsschlüssels für den gewünschten Dienst für das Endgerät (119) bei Empfang einer Bestätigungsnachricht von dem Endgerät (119).

12. Verfahren nach Anspruch 11, wobei wenigstens eine von der Roaminganforderungsnachricht, der Antwortnachricht und der Bestätigungsnachricht über ein interaktives Netzwerk (123), das mit dem fremden Dienstbereitsteller verbunden und für das Endgerät (119) zugänglich ist, versandt wird.

13. Verfahren nach Anspruch 10, des Weiteren umfassend:
Senden einer Antwortnachricht auf die Roaminganforderungsnachricht, wobei die Antwortnachricht das Dienstroaming erlaubt, wenn der Roamingtyp das Dienstroaming ist; und
Durchführen einer Ressourcenzuteilungsverhandlung zur Versorgung mit dem gewünschten Dienst zwischen dem eigenen Dienstbereitsteller und dem fremden Dienstbereitsteller bei Empfang einer Bestätigungsnachricht von dem Endgerät (119).

14. Verfahren nach Anspruch 13, wobei wenigstens eine von der Roaminganforderungsnachricht, der Antwortnachricht und der Bestätigungsnachricht über ein interaktives Netzwerk (123), das für das Endgerät (119) zugänglich ist, versandt wird.

15. Verfahren nach Anspruch 10, wobei das Empfangen des gewünschten Dienstes von dem eigenen Dienstbereitsteller und das Bereitstellen des gewünschten Dienstes für das Endgerät (119), wenn der Roamingtyp das Dienstroaming ist, was ein Senden von Rundsendedaten des gewünschten Dienstes von dem eigenen Dienstbereitsteller an das Endgerät (119) über ein interaktives Netzwerk (123), das für das Endgerät (119) zugänglich ist, umfasst.

16. Verfahren nach Anspruch 10, wobei das Empfangen des gewünschten Dienstes von dem eigenen Dienstbereitsteller und das Bereitstellen des gewünschten Dienstes für das Endgerät (119), wenn der Roamingtyp das Dienstroaming ist, was ein Senden von Rundsendedaten des gewünschten Dienstes von dem eigenen Dienstbereitsteller an das Endgerät (119) über ein Rundsendenetzwerk (122), das zu dem fremden Dienstbereitsteller gehört, umfasst.

17. Verfahren nach Anspruch 10, des Weiteren umfassend:
Senden von einen verfügbaren Dienst betreffender Information für einen Roamingnutzer von dem eigenen Dienstbereitsteller an das Endgerät (119) durch den fremden Dienstbereitsteller, wenn der Roamingtyp das Dienstroaming ist; und
Benachrichtigen des fremden Dienstbereitstellers über den gewünschten Dienst gemäß der Auswahl auf Grundlage der einen verfügbaren Dienst betreffenden Information von dem Endgerät (119).

18. Verfahren nach Anspruch 10, des Weiteren umfassend:
Senden von Roaminginformation von dem eigenen Dienstbereitsteller an das Endgerät (119), wobei die Roaminginformation die Erforderlichkeit einer Nutzerautorisierung während des Roaming zu dem fremden Netzwerk (200f) angibt; und Durchführen eines Roaming zu dem fremden Netzwerk (200f) ohne die Nutzerautorisierung für das Endgerät (119) zwischen dem eigenen Dienstbereitsteller und dem fremden Dienstbereitsteller, wenn die Roaminginformation angibt, dass die Nutzerautorisierung nicht erforderlich ist.

19. Endgerätvorrichtung zum Empfangen eines Roamingdienstes in einem Mobilrundsendesystem, umfassend:
einen Rundsendeempfänger (602) für einen Zugang zu einem Rundsendenetzwerk (122) und zum Empfangen von Daten und Signalisieren eines Rundsendedienstes;
einen interaktiven Adapter (604) für einen Zugang zu einem interaktiven Netzwerk (123), das mit dem Rundsendenetzwerk (122) verbunden ist, und zum Senden und Empfangen von Signalen im Zusammenhang mit dem Roamingdienst; und
einen Mobilitätsmanager (608) zum
Auswählen eines Roamingtyps zwischen Nutzerroaming und Dienstroaming durch ein Bestimmen entsprechend dem, ob ein gewünschter Rundsendedienst in einem von einem fremden Dienstbereitsteller betriebenen fremden Netzwerk (200f) auf Grundlage eines elektronischen Dienstführers (ESG), der eine Liste von Diensten beinhaltet, die in dem fremden Netzwerk (200f) bereitgestellt werden können, bei Empfang von dem fremden Dienstbereitsteller nach Eintritt in das fremde Netzwerk (200f) verfügbar ist;
Steuern des Rundsendeempfängers (602) zum Empfangen des gewünschten Dienstes von dem fremden Dienstbereitsteller, wenn der Roamingtyp das Nutzerroaming ist, und Steuern des interaktiven Adapters (604) zum Empfangen des gewünschten Dienstes von einem eigenen Dienstbereitsteller über das interaktive Netzwerk (123), wenn der Roamingtyp das Dienstroaming ist.

20. Endgerätvorrichtung nach Anspruch 19, wobei dann, wenn der Roamingtyp das Nutzerroaming ist, der Mobilitätsmanager (608) dafür ausgelegt ist, eine das Nutzerroaming angebende Nutzerroaminganforderungsnachricht an den fremden Dienstbereitsteller zu senden und eine Antwortnachricht auf die Nutzerroaminganforderungsnachricht von dem fremden Dienstbereitsteller empfängt, eine Bestätigungsnachricht an den fremden Dienstbereitsteller zu senden, wenn die Antwortnachricht eine Versorgung mit dem gewünschten Dienst in dem fremden Netzwerk (200f) erlaubt, und einen Zugangsschlüssel zum Empfangen des gewünschten Dienstes von dem fremden Dienstbereitsteller zu empfangen.

21. Endgerätvorrichtung nach Anspruch 20, wobei wenigstens eine von der Nutzerroaminganforderungsnachricht, der Antwortnachricht und der Bestätigungsnachricht dafür ausgelegt ist, über das interaktive Netzwerk (123), das mit dem fremden Dienstbereitsteller verbunden und für das Endgerät (119) zugänglich ist, versandt zu werden.

22. Endgerätvorrichtung nach Anspruch 19, wobei dann, wenn der Roamingtyp das Dienstroaming ist, der Mobilitätsmanager (608) dafür ausgelegt ist, eine das Dienstroaming angebende Dienstroaminganforderungsnachricht an den fremden Dienstbereitsteller zu senden, eine Antwortnachricht auf die Dienstroaminganforderungsnachricht von dem fremden Dienstbereitsteller zu empfangen, eine Bestätigungsnachricht an den fremden Dienstbereitsteller zu senden, wenn die Antwortnachricht eine Versorgung mit dem gewünschten Dienst in dem fremden Netzwerk (200f) erlaubt, und eine Ressourcenzuteilungsverhandlung für eine Versorgung mit dem gewünschten Dienst zwischen dem eigenen Dienstbereitsteller und dem fremden Dienstbereitsteller durchzuführen.

23. Endgerätvorrichtung nach Anspruch 22, wobei wenigstens eine von der Dienstroaminganforderungsnachricht, der Antwortnachricht und der Bestätigungsnachricht dafür ausgelegt ist, über das interaktive Netzwerk (123), das für das Endgerät (119) zugänglich ist, versandt zu werden.

24. Endgerätvorrichtung nach Anspruch 19, wobei dann, wenn der Roamingtyp das Dienstroaming ist, Rundsendedaten des gewünschten Dienstes dafür ausgelegt sind, von dem eigenen Dienstbereitsteller über das interaktive Netzwerk (123), das für das Endgerät (119) zugänglich ist, empfangen zu werden.

25. Endgerätvorrichtung nach Anspruch 19, wobei dann, wenn der Roamingtyp das Dienstroaming ist, Rundsendedaten des gewünschten Dienstes dafür ausgelegt sind, von dem eigenen Dienstbereitsteller über ein Rundsendenetzwerk (122), das zu dem fremden Dienstbereitsteller gehört, empfangen zu werden.

26. Endgerätvorrichtung nach Anspruch 19, wobei dann, wenn der Roamingtyp das Dienstroaming ist, der Mobilitätsmanager (608) dafür ausgelegt ist, einen verfügbaren Dienst betreffende Information für einen Roamingnutzer von dem eigenen Dienstbereitsteller durch den fremden Dienstbereitsteller zu empfangen, den gewünschten Dienst auf Grundlage der einen verfügbaren Dienst betreffenden Information auszuwählen und den fremden Dienstbereitsteller über den ausgewählten Dienst zu benachrichtigen.

27. Endgerätvorrichtung nach Anspruch 19, wobei der Mobilitätsmanager (608) dafür ausgelegt ist, von dem eigenen Dienstbereitsteller Roaminginformation zur Angabe der Erforderlichkeit einer Nutzerautorisierung während des Roaming zu dem fremden Netzwerk (200f) zu empfangen, und ein Roaming zu dem fremden Netzwerk (200f) ohne die Nutzerautorisierung für das Endgerät (119) zwischen dem eigenen Dienstbereitsteller und dem fremden Dienstbereitsteller durchzuführen, wenn die Roaminginformation angibt, dass die Nutzerautorisierung nicht erforderlich ist.

28. System zum Bereitstellen eines Roamingdienstes für ein Endgerät (119) in einem Mobilrundsendesystem, umfassend:
einen eigenen Dienstbereitsteller, dem sich ein Endgerät (119), das einen Rundsendedienst empfangen kann, als Teilnehmer angeschlossen hat; und einen fremden Dienstbereitsteller zum
Empfangen einer Roaminganforderungsnachricht von dem Endgerät (119), wenn das Endgerät (119) von einem von dem eigenen Dienstbereitsteller betriebenen eigenen Netzwerk (200h) in ein fremdes Netzwerk (200f) eintritt, Bestimmen, ob ein von der Roaminganforderungsnachricht angegebener Roamingtyp Nutzerroaming oder Dienstroaming ist,
Bereitstellen eines gewünschten Dienstes für das Endgerät (119) von dem fremden Dienstbereitsteller, wenn der Roamingtyp das Nutzerroaming ist, und Empfangen des gewünschten Dienstes von dem eigenen Dienstbereitsteller und Bereitstellen des gewünschten Dienstes für das Endgerät (119), wenn der Roamingtyp das Dienstroaming ist.

29. System nach Anspruch 28, wobei dann, wenn der Roamingtyp das Nutzerroaming ist, der fremde Dienstbereitsteller dafür ausgelegt ist, eine das Nutzerroaming erlaubende Antwortnachricht auf die Roaminganforderungsnachricht zu senden und einen Zugangsschlüssel für den gewünschten Dienst für das Endgerät (119) bei Empfang einer Bestätigungsnachricht von dem Endgerät (119) bereitzustellen.

30. System nach Anspruch 29, wobei wenigstens eine von der Roaminganforderungsnachricht, der Antwortnachricht und der Bestätigungsnachricht dafür ausgelegt ist, über ein interaktives Netzwerk (123), das mit dem fremden Dienstbereitsteller verbunden und für das Endgerät (119) zugänglich ist, versandt zu werden.

31. System nach Anspruch 28, wobei dann, wenn der Roamingtyp das Dienstroaming ist, der fremde Dienstbereitsteller dafür ausgelegt ist, eine das Dienstroaming erlaubende Antwortnachricht auf die Roaminganforderungsnachricht zu senden, eine Ressourcenzuteilungsverhandlung zur Versorgung mit dem gewünschten Dienst zwischen dem eigenen Dienstbereitsteller und dem fremden Dienstbereitsteller bei Empfang einer Bestätigungsnachricht von dem Endgerät (119) durchzuführen.

32. System nach Anspruch 31, wobei wenigstens eine von der Roaminganforderungsnachricht, der Antwortnachricht und der Bestätigungsnachricht dafür ausgelegt ist, über ein interaktives Netzwerk (123), das mit dem fremden Dienstbereitsteller verbunden und für das Endgerät (119) zugänglich ist, versandt zu werden.

33. System nach Anspruch 28, wobei dann, wenn der Roamingtyp das Dienstroaming ist, Rundsendedaten des gewünschten Dienstes dafür ausgelegt sind, von dem eigenen Dienstbereitsteller an das Endgerät (119) über ein interaktives Netzwerk (123), das für das Endgerät (119) zugänglich ist, versandt zu werden.

34. System nach Anspruch 28, wobei dann, wenn der Roamingtyp das Dienstroaming ist, Rundsendedaten des gewünschten Dienstes dafür ausgelegt sind, von dem eigenen Dienstbereitsteller an das Endgerät (119) über ein Rundsendenetzwerk (122), das zu dem fremden Dienstbereitsteller gehört, versandt zu werden.

35. System nach Anspruch 28, wobei dann, wenn der Roamingtyp das Dienstroaming ist, der fremde Dienstbereitsteller dafür ausgelegt ist, einen verfügbaren Dienst betreffende Information für einen Roamingnutzer von dem eigenen Dienstbereitsteller an das Endgerät (119) zu senden und über den gewünschten Dienst gemäß der Auswahl auf Grundlage der einen verfügbaren Dienst betreffenden Information von dem Endgerät (119) benachrichtigt zu werden.

36. System nach Anspruch 28, wobei der eigene Dienstbereitsteller dafür, ausgelegt ist, an das Endgerät (119) Roaminginformation zur Angabe der Erforderlichkeit einer Nutzerautorisierung während des Roaming zu dem fremden Netzwerk (200f) zu senden und ein Roaming zu dem fremden Netzwerk (200f) ohne die Nutzerautorisierung für das Endgerät (119) mit dem fremden Dienstbereitsteller durchzuführen, wenn die Roaminginformation angibt, dass die Nutzerautorisierung nicht erforderlich ist.

## Revendications

1. Une méthode d'itinérance pour un terminal (119) dans un système de diffusion mobile, comprenant :
réception par un terminal mobile d'un guide de service électronique (ESG) incluant une liste de services capable d'être fournis dans un réseau étranger (200f) d'un fournisseur de service étranger après l'entrée dans le réseau étranger (200f) opéré par le fournisseur de service étranger ;
détermination si le service de diffusion recherché est fourni par le réseau étranger (200f) en se référant au ESG ;
sélection d'un type d'itinérance entre l'itinérance utilisateur et l'itinérance service en accord avec le fait que le service recherché est accessible dans le réseau étranger (200f) ;
réception du service recherché du fournisseur de service étranger, si le type d'itinérance est l'itinérance utilisateur ; et
réception du service recherché d'un fournisseur de service maison via le réseau étranger (200f), si le type d'itinérance est l'itinérance service.

2. La méthode d'itinérance selon la revendication 1, comprenant de plus :
envoi d'un message de proposition d'itinérance utilisateur indiquant l'itinérance utilisateur au fournisseur de service étranger et réception d'un message de réponse pour le message de proposition d'itinérance utilisateur du fournisseur de service étranger, si le type d'itinérance est l'itinérance utilisateur ;
envoi d'un message de confirmation au fournisseur de service étranger, si le message de réponse autorise l'approvisionnement du service recherché dans le réseau étranger (200f) ; et
réception d'une clé d'accès pour la réception du service recherché du fournisseur de service étranger.

3. La méthode d'itinérance selon la revendication 2, dans laquelle au moins un des messages parmi le message de proposition d'itinérance utilisateur, le message de réponse et le message de confirmation est délivré via un réseau interactif (123) connecté au fournisseur de service étranger et accessible par le terminal (119).

4. La méthode d'itinérance selon la revendication 1, comprenant de plus :
envoi d'un message de proposition d'itinérance service indiquant l'itinérance service au fournisseur de service étranger et réception d'un message de réponse pour le message de proposition d'itinérance service du fournisseur de service étranger, si le type d'itinérance est l'itinérance service ;
envoi d'un message de confirmation au fournisseur de service étranger, si le message de réponse autorise l'approvisionnement du service recherché dans le réseau étranger (200f) ; et
réalisation d'une négociation d'attribution de ressource pour l'approvisionnement du service recherché entre le fournisseur de service maison et le fournisseur de service étranger.

5. La méthode d'itinérance selon la revendication 4, dans laquelle au moins un des messages parmi le message de proposition d'itinérance service, le message de réponse et le message de confirmation est délivré via un réseau interactif (123) accessible par le terminal (119).

6. La méthode d'itinérance selon la revendication 1, comprenant la réception du service recherché par un fournisseur de service maison via le réseau étranger (200f), si le type d'itinérance est l'itinérance service, laquelle comprend la réception de données de diffusion du service recherché du fournisseur de service maison via un réseau interactif (123) accessible par le terminal (119).

7. La méthode d'itinérance selon la revendication 1, comprenant la réception du service recherché par le fournisseur de service maison via le réseau étranger (200f), si le type d'itinérance est l'itinérance service, laquelle comprend la réception de données de diffusion du service recherché du fournisseur de service maison via un réseau de diffusion (122) appartenant au fournisseur de service étranger.

8. La méthode d'itinérance selon la revendication 1, comprenant de plus :
réception d'informations de disponibilité de service pour un utilisateur itinérant du fournisseur de service maison via le fournisseur de service étranger, si le type d'itinérance est l'itinérance service ;
sélection du service recherché basé sur les informations de disponibilité de service et notification au fournisseur de service étranger du service sélectionné.

9. La méthode d'itinérance selon la revendication 1, comprenant de plus :
réception du fournisseur de service maison d'informations d'itinérance indiquant si une autorisation utilisateur est requise pendant l'itinérance vers le réseau étranger (200f) ; et
réalisation d'itinérance vers le réseau étranger (200f) sans autorisation utilisateur pour le terminal (119) entre le fournisseur de service maison et le fournisseur de service étranger, si les informations d'itinérance indiquent que l'autorisation utilisateur n'est pas requise.

10. Une méthode de mise à disposition d'un service d'itinérance pour un terminal (119) dans un système de diffusion mobile, comprenant :
réception d'un message de proposition d'itinérance depuis un terminal (119) qui est entré d'un réseau maison (200h), opéré par un fournisseur de service maison, dans un réseau étranger (200f), opéré par un fournisseur de service étranger, et détermination si un type d'itinérance indiqué par le message de proposition d'itinérance est une itinérance utilisateur ou une itinérance service ;
mise à disposition d'un service recherché pour le terminal (119) par le fournisseur de service étranger, si le type d'itinérance est l'itinérance utilisateur ; et réception du service recherché du fournisseur de service maison et mise à disposition du service recherché pour le terminal (119), si le type d'itinérance est l'itinérance service.

11. La méthode selon la revendication 10, comprenant de plus :
envoi d'un message de réponse pour le message de proposition d'itinérance au terminal (119), la réponse autorisant l'itinérance utilisateur, si le type d'itinérance est l'itinérance utilisateur ; et
mise à disposition d'une clé d'accès pour le service recherché au terminal (119) dès la réception d'un message de confirmation du terminal (119).

12. La méthode selon la revendication 11, dans laquelle au moins un des messages parmi le message de proposition d'itinérance, le message de réponse et le message de confirmation est délivré via un réseau interactif (123) connecté à un fournisseur de service étranger et accessible par le terminal (119).

13. La méthode selon la revendication 10, comprenant de plus :
envoi d'un message de réponse pour le message de proposition d'itinérance, le message de réponse autorisant l'itinérance service, si le type d'itinérance est l'itinérance service ;
réalisation d'une négociation d'attribution de ressource pour l'approvisionnement du service recherché entre le fournisseur de service maison et le fournisseur de service étranger, dès la réception d'un message de confirmation du terminal (119).

14. La méthode selon la revendication 13, dans laquelle au moins un des messages parmi le message de proposition d'itinérance, le message de réponse et le message de confirmation est délivré via un réseau interactif (123) accessible par le terminal (119).

15. La méthode de la revendication 10, dans laquelle la réception du service recherché du fournisseur de service maison et la mise à disposition du service recherché pour le terminal (119), si le type d'itinérance est l'itinérance service, comprend l'envoi de données de diffusion du service recherché du fournisseur de service maison au terminal (119) via un réseau interactif (123) accessible par le terminal (119).

16. La méthode de la revendication 10, dans laquelle la réception du service recherché du fournisseur de service maison et la mise à disposition du service recherché pour terminal (119), si le type d'itinérance est l'itinérance service, comprend l'envoi de données de diffusion du service recherché du fournisseur de service maison au terminal (119) via un réseau de diffusion (122) appartenant au fournisseur de service étranger.

17. La méthode de la revendication 10, comprenant de plus :
envoi d'informations de service disponible pour un utilisateur itinérant du fournisseur de service maison au terminal (119) via le fournisseur de service étranger, si le type d'itinérance est l'itinérance service ; et
notification du fournisseur de service étranger du service recherché sélectionné sur la base des informations de service disponible par le terminal (119).

18. La méthode de la revendication 10, comprenant de plus :
envoi d'informations d'itinérance du fournisseur de service maison au terminal (119), les informations d'itinérance indiquant si une autorisation utilisateur est requise durant l'itinérance vers le réseau étranger (200f) ; et réalisation d'itinérance vers le réseau étranger (200f) sans autorisation utilisateur pour le terminal (119) entre le fournisseur de service maison et le fournisseur de service étranger, si les informations d'itinérance indiquent que l'autorisation utilisateur n'est pas requise.

19. Un appareil terminal pour la réception d'un service d'itinérance dans un système de diffusion mobile, comprenant :
Un récepteur de diffusion (602) pour accéder à un réseau de diffusion (122) et recevoir des données et l'indication d'un service de diffusion ;
Un adaptateur interactif (604) pour accéder à un réseau interactif (123) connecté au réseau de diffusion (122) et envoyer et recevoir des signaux associés avec le service itinérant ; et
un gestionnaire de mobilité (608) pour
la sélection d'un type d'itinérance entre itinérance utilisateur et itinérance service en déterminant si et en accord avec le cas ou un service de diffusion est disponible dans un réseau étranger (200f) opéré par un fournisseur de service étranger sur la base d'un guide de service électronique (ESG), incluant une liste de services pouvant être fournis dans le réseau étranger (200f), reçu du fournisseur de service étranger après l'entrée dans le réseau étranger (200f),
le contrôle du récepteur de diffusion (602) pour recevoir le service recherché du fournisseur de service étranger, si le type d'itinérance est l'itinérance utilisateur, et le contrôle de l'adaptateur interactif (604) pour recevoir le service recherché du fournisseur de service maison via le réseau interactif (123), si le type d'itinérance est l'itinérance service.

20. L'appareil terminal selon la revendication 19, dans lequel si le type d'itinérance est l'itinérance utilisateur, le gestionnaire de mobilité (608) est adapté pour l'envoi d'un message de proposition d'itinérance utilisateur indiquant l'itinérance utilisateur au fournisseur de service étranger et reçoit un message de réponse pour le message de proposition d'itinérance utilisateur du fournisseur de service étranger, pour l'envoi d'un message de confirmation au fournisseur de service étranger, si le message de réponse autorise l'approvisionnement du service recherché dans le réseau étranger (200f), et pour la réception d'une clé d'accès pour recevoir le service recherché du fournisseur de service étranger.

21. L'appareil terminal selon la revendication 20, dans lequel au moins un des messages parmi le message de proposition d'itinérance utilisateur, le message de réponse et le message de confirmation est adapté pour être délivré via le réseau interactif (123) connecté avec le fournisseur de service étranger et accessible par le terminal (119).

22. L'appareil terminal selon la revendication 19, dans lequel si le type d'itinérance est l'itinérance service, le gestionnaire de mobilité (608) est adapté pour l'envoi d'un message de proposition d'itinérance service indiquant l'itinérance service au fournisseur de service étranger et reçoit un message de réponse pour le message de proposition d'itinérance service du fournisseur de service étranger, pour l'envoi d'un message de confirmation au fournisseur de service étranger, si le message de réponse autorise l'approvisionnement du service recherché dans le réseau étranger (200f), et pour la réalisation d'une négociation d'attribution des ressources pour l'approvisionnement du service recherché entre le fournisseur de service maison et le fournisseur de service étranger.

23. L'appareil terminal selon la revendication 22, dans lequel au moins un des messages parmi le message de proposition d'itinérance service, le message de réponse et le message de confirmation est adapté pour être délivré via le réseau interactif (123) accessible par le terminal (119).

24. L'appareil terminal selon la revendication 19, dans lequel, si le type d'itinérance est l'itinérance service, des données de diffusion du service recherché sont adaptées pour être reçues du fournisseur de service maison via le réseau interactif (123) accessible par le terminal (119).

25. L'appareil terminal selon la revendication 19, dans lequel, si le type d'itinérance est l'itinérance service, des données de diffusion du service recherché sont adaptées pour être reçues du fournisseur de service maison via un réseau de diffusion (122) appartenant au fournisseur de service étranger.

26. L'appareil terminal selon la revendication 19, dans lequel, si le type d'itinérance est l'itinérance service, le gestionnaire de mobilité (608) est adapté pour recevoir des informations de service disponible pour un utilisateur itinérant du fournisseur de service maison via le fournisseur de service étranger, et pour sélectionner le service recherché sur la base des informations de service disponible et pour notifier au fournisseur de service étranger le service sélectionné.

27. L'appareil terminal selon la revendication 19, dans lequel le gestionnaire de mobilité (608) est adapté pour recevoir du fournisseur de service maison des informations d'itinérance indiquant si une autorisation utilisateur est requise pendant l'itinérance vers le réseau étranger (200f), et réalise une itinérance vers le réseau étranger (200f) sans l'autorisation utilisateur pour le terminal (119) entre le fournisseur de service maison et le fournisseur de service étranger, si les informations d'itinérance indiquent que l'autorisation utilisateur n'est pas requise.

28. Un système pour mettre à disposition d'un service d'itinérance pour un terminal (119) dans un système de diffusion mobile, comprenant :
un fournisseur de service maison auquel un terminal (119) capable de recevoir un service de diffusion a souscrit ; et
un fournisseur de service étranger pour
la réception d'un message de proposition d'itinérance du terminal (119) lorsque le terminal (119) entre d'un réseau maison (200h) opéré par le fournisseur de service maison dans un réseau étranger (200f),
la détermination si un type d'itinérance indiqué par le message de proposition d'itinérance est une itinérance utilisateur ou une itinérance service,
la mise à disposition d'un service recherché pour le terminal (119) par le fournisseur de service étranger, si le type d'itinérance est l'itinérance utilisateur, et la réception du service recherché du fournisseur de service maison et mise à disposition du service recherché pour le terminal (119) avec le service recherché, si le type d'itinérance est l'itinérance service.

29. Le système selon la revendication 28, dans lequel si le type d'itinérance est l'itinérance utilisateur, le fournisseur de service étranger est adapté pour envoyer un message de réponse autorisant l'itinérance utilisateur pour le message de proposition d'itinérance, et pour fournir une clé d'accès au terminal (119) pour le service recherché dès la réception d'un message de confirmation du terminal (119).

30. Le système selon la revendication 29, dans lequel au moins un des messages parmi le message de proposition d'itinérance, le message de réponse et le message de confirmation est adapté pour être délivré via un réseau interactif (123) connecté au fournisseur de service étranger et accessible par le terminal (119).

31. Le système selon la revendication 28, dans lequel si le type d'itinérance est l'itinérance service, le fournisseur de service étranger est adapté pour envoyer un message de réponse autorisant l'itinérance service pour le message de proposition d'itinérance, et pour réaliser une négociation d'attribution des ressources pour l'approvisionnement du service recherché entre le fournisseur de service maison et le fournisseur de service étranger, dès la réception d'un message de confirmation du terminal (119).

32. Le système selon la revendication 31, dans lequel au moins un des messages parmi le message de proposition d'itinérance, le message de réponse et le message de confirmation est adapté pour être délivré via un réseau interactif (123) connecté au fournisseur de service étranger et accessible par le terminal (119).

33. Le système selon la revendication 28, dans lequel si le type d'itinérance est l'itinérance service, des données de diffusion du service recherché sont adaptées pour être envoyées du fournisseur de service maison au terminal (119) via un réseau interactif (123) accessible par le terminal (119).

34. Le système selon la revendication 28, dans lequel si le type d'itinérance est l'itinérance service, des données de diffusion du service recherché sont adaptées pour être envoyées du fournisseur de service maison au terminal (119) via un réseau de diffusion (122) appartenant au fournisseur de service étranger.

35. Le système selon la revendication 28, dans lequel si le type d'itinérance est l'itinérance service, le fournisseur de service étranger est adapté pour envoyer des informations de service disponible pour un utilisateur itinérant du fournisseur de service maison au terminal (119) et pour être notifié par le terminal (119) du service recherché sélectionné sur la base des informations de service disponible.

36. Le système selon la revendication 28, dans lequel le fournisseur de service maison est adapté pour envoyer au terminal (119) des informations d'itinérance indiquant si une autorisation utilisateur est requise pendant l'itinérance vers le réseau étranger (200f) et pour réaliser l'itinérance vers le réseau étranger (200f) sans l'autorisation utilisateur pour le terminal (119) avec le fournisseur de service étranger, si les informations d'itinérance indiquent que l'autorisation utilisateur n'est pas requise.
